# EUROPÄISCHE PATENTANMELDUNG

(11) **EP 1 239 432 A2**
(43) Veröffentlichungstag der Anmeldung: **11.09.2002**
(21) Anmeldenummer: 02002908.8
(22) Anmeldetag: 09.02.2002
(51) Int. Cl.: G08B 17/04

(54) **Verfahren zur Ermittlung und Meldung von Überhitzungen und Feuern in einem Flugzeug**

(30) Priorität: 10.03.2001 DE 10111640
(71) Anmelder: Airbus Deutschland GmbH, 21129 Hamburg (DE)
(72) Erfinder: Dammann, Hans-Joachim, 21614 Buxtehude (DE)
(74) Vertreter: Hansmann, Dierk, Dipl.-Ing.

(57) **Zusammenfassung**

Das Verfahren dient insbesondere zur örtlichen Ermittlung einer unzuläßigen Temperaturerhöhung an einem Objekt eines Flugzeuges, wobei eine Temperaturerhöhung und ihre räumliche Zuordnung über Sensoren erfaßt und an eine Auswerteeinheit vorzugsweise zur Generierung von Alarm- und/oder Schaltvorgängen weiter geleitet werden.

Um eine ungestörte und lückenlose Überhitzungs- und Feuerüberwachung mittels verhältnismäßig einfach herzustellender sowie meßgenauer Sensoren sicherzustellen, ist vorgesehen,
- daß mindestens ein aus einem Glasfaserkabel bestehender Sensor in unmittelbarer Nähe eines zu überwachenden Objektes verlegt und mit mindestens einem seiner Enden an eine Anschlußstelle eines Rechners angeschlossen wird,
- daß mittels eines vom Rechner gesteuerten Lasersenders kurzzeitige Lichtimpulse in das Glasfaserkabel gesendet werden, deren Reflektionssignale von einer rechnergesteuerten Empfangseinheit empfangen und im Rechner mit einem vorgegebenen Vergleichssignal mit einer von der Länge des Glasfaserkabels abhängigen Reflektions-Laufzeit verglichen werden,
- daß bei Auftritt einer unzuläßigen Temperaturerhöhung des Objektes eine Änderung der Brechungseigenschaften des Glasfaserkabels bewirkt und ein von dem Vergleichssignal abweichendes einen zusätzlichen Reflektionsimpuls aufweisendes Reflektionssignal erzeugt wird, und
- daß aus der Amplitude des Reflektionsimpulses die unzulässige Temperaturerhöhung des Objektes sowie aus der Laufzeit des Reflektionsimpulses der Ort der unzuläßigen Temperaturhöhung des Objektes im Rechner ermittelt werden.

## Beschreibung

Die Erfindung betrifft ein Verfahren zur Ermittlung und Meldung von Überhitzungen und Feuern in einem Flugzeug, insbesondere zur örtlichen Ermittlung einer unzuläßigen Temperaturerhöhung in einem Raum, in einer Rohrleitung, an einem Gerät oder an einem Druckluftsystem, dessen Rohrleitungen zur Entnahme von heißer Druckluft an die Flugzeugtriebwerke angeschlossen sind, wobei eine Temperaturerhöhung und ihre räumliche Zuordnung über Sensoren erfaßt und an eine Auswerteeinheit zur Auswertung und vorzugsweise zur Generierung von Alarm- und/oder Schaltvorgängen weiter geleitet werden.

In Flugzeugen wird ein Druckluftsystem eingesetzt, welches heiße Triebwerks-Druckluft für verschiedene Flugzeuganwendungen zur Verfügung stellt, beispielsweise zur Klimatisierung der Flugzeugkabine. Diese heiße Luft, die Temperaturen von bis zu 200°C erreicht, kann bei Rohrbrüchen oder Leckagen des Rohrleitungssystems ausströmen und zu einer Beschädigung von Flugzeugteilen führen. Um dieses zu verhindern, wird in Flugzeugen bisher ein Überwachungssystem eingesetzt, welches ein fehlerhaftes Austreten von heißer Luft mittels Sensoren erkennt und mit Hilfe eines Rechners Warnungen generiert und/oder die Druckluftzufuhr abschaltet. Damit bei Wartungsarbeiten die Zeit für eine Fehlersuche am umfangreichen Leitungssystem auf ein Minimum reduziert werden kann, wird auch die Lokalität der Überhitzung ermittelt und angezeigt.

Bei dem bekannten System zur Überhitzungsüberwachung kommen Sensoren zur Anwendung, welche entlang der zu überwachenden Rohrleitungen verlegt und an einen Rechner, der die von den Sensoren ermittelten Daten auswertet, angeschlossen sind. Hierbei besitzt ein Sensor die Form eines Drahtes mit jeweils einem elektrischen Stecker an seinen beiden Enden. Der Sensor besteht aus einem als dünnes Röhrchen ausgebildeten "äußeren Leiter" und einem in der Mitte des Röhrchen verlaufenden "inneren Leiter", wobei zwischen beiden Leitern ein spezielles Salz gepreßt ist. Das Salz wirkt bei normalen Temperaturen als Isolator, wird allerdings bei Überschreitung einer vergebenen Temperatur elektrisch leitend und ergibt dann einen niedrigen Widerstand zwischen dem inneren und äußeren Leiter. Die sogenannte "Trigger-Temperatur", bei der das Salz elektrisch leitend wird, ist durch sein Mischungsverhältnis einstellbar.

Der bei dem beschriebenen System verwendete Rechner mißt in regelmäßigen Abständen den Widerstand zwischen dem äußeren und inneren Leiter eines Sensors. Bei einer Überhitzung des Sensors infolge eines unzuläßigen Temperaturanstieges in seiner Umgebung erkennt der Rechner den niedrigen Widerstand des Sensors als Überhitzungsfall und kann eine Alarmmeldung oder ein Schaltsignal zur Abschaltung des Systems generieren. Weiterhin kann mit Hilfe des Rechners die Position des Überhitzungsortes festgestellt werden, indem das Widerstandsverhältnis des inneren Leiters vom Überhitzungspunkt bis zu den beiden Endpunkten ermittelt wird. Das bekannte System weist folgende Nachteile auf:
- die Sensoren sind in der Herstellung aufwendig und erfordern eine definierte Einstellung der gewünschten "Trigger-Temperatur";
- die Toleranzen für den sogenannten "Trigger-Punkt" sind relativ groß;
- die Sensoren sind für einen engen Temperaturbereich ausgelegt, so daß ein Austausch von Sensoren vorgenommen werden muß, wenn ein Temperaturbereich des Überwachungssystems geändert werden soll;
- die Lokalisierung des Überhitzungsbereiches ist relativ ungenau; und
- das vom Sensor abgegebene und vom Rechner empfangene Meßsignal ist gegen elektromagnetische Störungen empfindlich.

Der Erfindung liegt daher die Aufgabe zugrunde, ein Verfahren der eingangs genannten Art zu schaffen, mit dem eine ungestörte und lückenlose Überhitzungs- und Feuerüberwachung in Flugzeugen mit Hilfe von verhältnismäßig einfach herzustellenden sowie meßgenauen Sensoren sichergestellt ist.

Die Aufgabe wird erfindungsgemäß dadurch gelöst,
- daß mindestens ein aus einem Glasfaserkabel bestehender Sensor in unmittelbarer Nähe eines zu überwachenden Objektes verlegt und mit mindestens einem seiner Enden an eine Anschlußstelle eines Rechners angeschlossen wird,
- daß mittels eines vom Rechner gesteuerten Lasersenders kurzzeitige Lichtimpulse in das Glasfaserkabel des Sensors gesendet werden, deren Reflexionssignale von einer rechnergesteuerten Empfangseinheit empfangen und im Rechner mit einem vorgegebenen Vergleichssignal mit einer von der Länge des Glasfaserkabels abhängigen Reflexions-Laufzeit (T₁) verglichen werden,
- daß bei Auftritt einer unzuläßigen Temperaturerhöhung des Objektes eine Änderung der Brechungseigenschaften des Glasfaserkabels bewirkt und ein von dem Vergleichssignal abweichendes einen zusätzlichen Reflexionsimpuls aufweisendes Reflexionssignal erzeugt wird, und
- daß aus der Amplitude (A) des Reflexionsimpulses die unzuläßige Temperaturerhöhung des Objektes sowie aus der Laufzeit (T₂) des Reflexionsimpulses der Ort der unzulässigen Temperaturerhöhung des Objektes im Rechner ermittelt werden.

Ausgestaltungen der Erfindung sind in den Unteransprüchen beschrieben.

Durch das erfindungsgemäße Verfahren kann vorteilhafterweise mit Hilfe des Rayleigh-Effektes eine Temperaturerhöhung an einem bestimmten Ort entlang des Glasfaserkabels gemessen und mittels Fresnel-Effektes der Ort der Temperaturerhöhung festgestellt werden. Mit diesen Meßergebnissen können unter Einbeziehung von vorgegebenen vorzugsweise durch Software-Änderungen einstellbaren Vergleichssignalen im Rechner folgende Aufgaben zur Überhitzungs- und auch Feuerüberwachung in vorteilhafter Weise übernommen werden:
- Feststellung des Überschreitens von Temperaturgrenzen entlang des Sensors, wobei entlang des Sensors unterschiedliche vorzugsweise durch Software-Änderungen einstellbare Temperaturgrenzen vorgesehen sein können;
- Feststellung der Dauer von Überhitzungen;
- Erfassung des Temperaturverlaufes über vorgegebene Zeitintervalle;
- Detektion von fehlerhaften Unterbrechungen im Glasfaserkabel, wobei der Teil des Glaserfaserkabels zwischen Rechner und Bruchstelle funktionsfähig bleibt und weiterhin zur Überwachung verwendet werden kann;
- Anzeige der vom Rechner ermittelten Ergebnisse und/oder Vornahme von erforderlichen Manipulationen am System bzw. Abschaltung des Überwachungssystem bei Überschreitung vorgegebener Temperaturwerte.

In der Zeichnung ist ein erfindungsgemäßes Ausführungsbeispiel für ein Überwachungssystem zur Durchführung des Verfahrens nach der Erfindung dargestellt, und zwar zeigt:
- Fig. 1: eine Anordnung zur Überwachung von Überhitzungen an Geräten, Rohren oder in Räumen;
- Fig. 2a: ein Leistungs-Zeit-Diagramm eines in ein Glasfaserkabel eingespeisten Lichtimpulses;
- Fig. 2b: ein Leistungs-Zeit-Diagramm eines reflektiertes Signals des Lichtimpulses gemäß Fig. 2a;
- Fig. 3a: ein Leistungs-Zeit-Diagramm eines in ein Glasfaserkabel eingespeisten Lichtimpulses; und
- Fig. 3b: ein Leistungs-Zeit-Diagramm eines reflektiertes Signal des Lichtimpulses gemäß Fig. 3a mit Rayleigh-Reflexion aufgrund einer örtlichen Temperaturerhöhung.

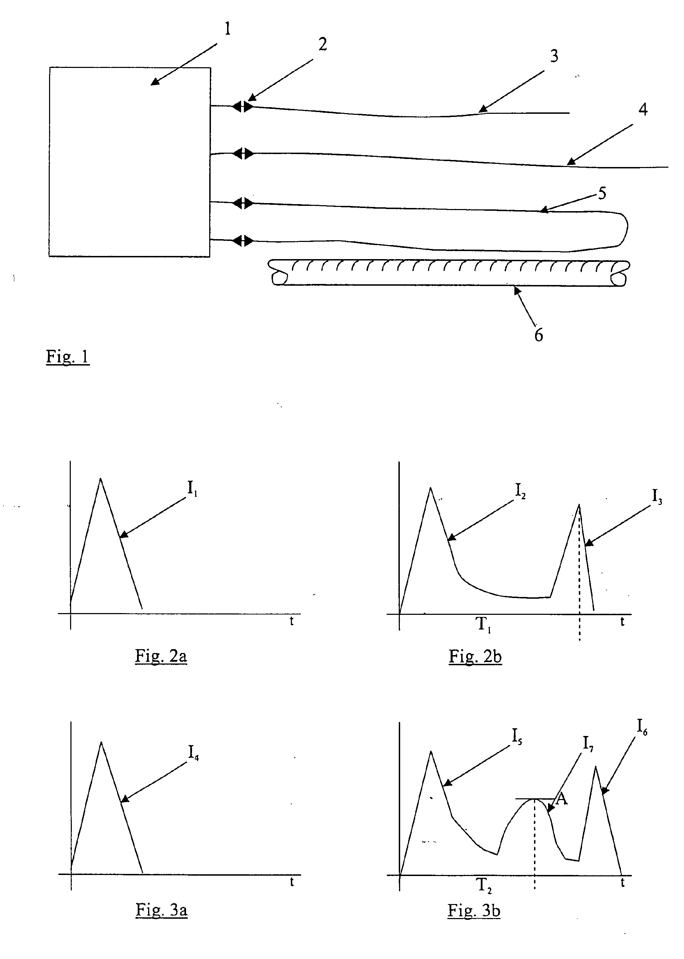

In Fig. 1 ist ein Rechner mit 1 bezeichnet, an dessen Anschlußbereich / Interface 2 insgesamt drei Sensoren 3, 4 und 5 angeschlossen sind. Die Sensoren bestehen jeweils aus einem Glasfaserkabel, wobei die Kabel der Sensoren 3 und 4 mit nur einem ihrer Enden am Rechner 1 angeschlossen sind. Hingegen ist Sensor 5 als Schleife derart verlegt, daß beide Enden seines Glasfaserkabels an der Anschlußstelle 2 des Rechners 1 angeschlossen sind. Sensor 5 ist neben einem zu überwachenden Objekt in Form einer Rohrleitung 6 angeordnet, die Bestandteil eines Druckluftsystems in einem Flugzeug ist. Für die Ermittlung von unzuläßigen Temperaturerhöhungen der Rohrleitung 6 wird der Rayleigh-Effekt genutzt. Hierbei werden Temperaturen mit Hilfe der Rayleigh-Streuung im Glasfaserkabel ermittelt, indem man die Temperaturabhängigkeit der Brechungseigenschaften des Glasfaserkabels nutzt.

Weiterhin kann mit Hilfe des Fresnel-Effektes die Länge der Sensoren 3, 4 und 5 ermittelt werden. Hierzu wird zum Beispiel von einem zeichnerisch nicht dargestellten Lasersender, der von dem Rechner 1 gesteuert wird, ein Lichtimpuls in das Glasfaserkabel des Sensors 3 gesendet. Am Ende des Glasfaserkabels entsteht eine zusätzliche Fresnel-Reflexion, deren Laufzeit "t" direkt abhängig von der Länge des Glasfaserkabels ist und somit zur rechnerischen Bestimmung der Länge des Sensors 3 herangezogen werden kann. Auf diese Weise kann auch die örtliche Lage von Unterbrechungen in einem Glasfaserkabel, beispielsweise aufgrund von Änderungen der Brechungseigenschaften des Glasfaserkabels, ermittelt werden. Hierzu sendet der Lasersender kurze Laserimpulse in das entsprechende Glasfaserkabel, wobei die entstehenden Reflexionen in einem zeichnerisch nicht dargestellten Laserempfänger empfangen und im Rechner 1 aufbereitet werden. Neben den Amplituden der reflektierten Signale wird jeweils die Zeit zwischen dem Aussenden der Laserimpulse und dem Empfang der reflektierten Signale erfaßt. Die gemessenen Werte werden mit vorgegebenen Vergleichssignalen verglichen, woraus dann die gewünschten physikalischen Größen wie Temperaturerhöhung und deren örtliche Lage in dem Glasfaserkabel rechnerisch ermittelbar sind.

In dem Diagramm gemäß Fig. 2a ist der zeitliche Kurvenverlauf eines von dem Lasersender in ein Glasfaserkabel eingespeisten Lichtimpulses dargestellt, wobei es sich um einen Dreieckimpuls I₁ handelt. Der zeitliche Kurvenverlauf des zugehörigen Reflexionssignals, welches als oben genanntes Vergleichssignal verwendet wird, ist aus dem in Fig. 2b dargestellten Diagramm ersichtlich. Dieses Diagramm zeigt den reflektierten Impuls I₂ und einen durch die Fresnel-Reflexion entstandenen Impuls I₃. Die angegebene Zeitdauer T₁ ist ein Maß für die Länge des entsprechenden Glasfaserkabels.

Fig. 3a zeigt den zeitlichen Kurvenverlauf eines weiteren vom Lasersender ausgesandten Lichtimpulses I₄, welcher in ein eine unzuläßige örtliche Temperaturerhöhung aufweisendes Glasfaserkabel eingespeist wird. Der Kurvenverlauf des zugehörigen Reflexionssignales ist in Fig. 3b dargestellt. Der Verlauf dieses Reflexionssignals unterscheidet sich von dem aus Fig. 2b ersichtlichen Kurvenverlauf dadurch, daß neben den Impulsen I₅ und I₆ ein weiterer Reflexionsimpuls I₇ infolge erhöhter Reflexion an dem Ort der unzuläßigen Temperaturerhöhung auftritt. Die erhöhte Reflexion wird durch die von der Temperatur abhängige Brechungseigenschaft des Glasfaserkabels hervorgerufen, wobei die Amplitude A des Reflexionsimpulses I₇ von der Größe der Temperaturerhöhung abhängig ist und mittels Rayleigh-Effekt gemessen wird. Über die mit Hilfe der Fresnel-Reflexion gemessene Laufzeit T₂ des zusätzlichen Reflexionsimpulses I₇ wird im Rechner 1 der Ort der unzuläßigen Temperaturerhöhung im Glasfaserkabel ermittelt.

### Bezugszeichenliste

- 1: Rechner
- 2: Anschlußstelle / Interface
- 3: Sensor
- 4: Sensor
- 5: Schleifen-Sensor
- 6: Rohrleitung

- A:: Amplitude des zusätzlichen Reflexionsimpulses I₇
- I₁, I₄:: Lichtimpulse
- I₂, I₃, I₅, I₆, I₇:: Reflexionsimpulse
- T₁, T₂:: Reflexionslaufzeiten

## Patentansprüche

1. Verfahren zur Ermittlung und Meldung von Überhitzungen und Feuern in einem Flugzeug, insbesondere zur örtlichen Ermittlung einer unzuläßigen Temperaturerhöhung eines zu überwachenden Objektes wie eines Raumes, einer Rohrleitung, eines Gerätes oder eines Druckluftsystems, dessen Rohrleitungen zur Entnahme von heißer Druckluft an die Flugzeugtriebwerke angeschlossen sind, wobei eine Temperaturerhöhung und ihre räumliche Zuordnung über Sensoren erfaßt und an eine Auswerteeinheit zur Auswertung und vorzugsweise zur Generierung von Alarm- und/oder Schaltvorgängen weiter geleitet werden, **dadurch gekennzeichnet,**
- **daß** mindestens ein aus einem Glasfaserkabel bestehender Sensor (3,4,5) in unmittelbarer Nähe eines zu überwachenden Objektes (6) verlegt und mit mindestens einem seiner Enden an eine Anschlußstelle (Interface 2) eines Rechners (1) angeschlossen wird,
- **daß** mittels eines vom Rechner (1) gesteuerten Lasersenders kurzzeitige Lichtimpulse (I₁, I₄) in das Glasfaserkabel des Sensors (3,4,5) gesendet werden, deren Reflexionssignale (I₂, I₃, I₅, I₆) von einer rechnergesteuerten Empfangseinheit empfangen und im Rechner (1) mit einem vorgegebenen Vergleichssignal mit einer von der Länge des Glasfaserkabels abhängigen Reflexions-Laufzeit (T₁) verglichen werden,
- **daß** bei Auftritt einer unzuläßigen Temperaturerhöhung des Objektes (6) eine Änderung der Brechungseigenschaften des Glasfaserkabels bewirkt und ein von dem Vergleichssignal abweichendes einen zusätzlichen Reflexionsimpuls (I₇) aufweisendes Reflexionssignal erzeugt wird, und
- **daß** aus der Amplitude (A) des Reflexionsimpulses (I₇) die unzuläßige Temperaturerhöhung des Objektes (6) sowie aus der Laufzeit (T₂) des Reflexionsimpulses (I₇) der Ort der unzuläßigen Temperaturerhöhung des Objektes (6) im Rechner (1) ermittelt werden.

2. Verfahren nach Anspruch 1, **dadurch gekennzeichnet, daß** der Sensor (5) als Schleife an einem Objekt (6) derart verlegt ist, daß beide Enden des Glasfaserkabels an der Anschlußstelle (Interface 2) des Rechners (1) angeschlossen werden.

3. Verfahren nach Anspruch 1 oder 2, **dadurch gekennzeichnet, daß** das Vergleichssignal sowie seine von der Länge des Glasfaserkabels abhängige Reflexions-Laufzeit (T₁) nach Aussendung eines Eichimpulses durch "Fresnel-Reflexion" des Eichimpulses am Ende des Glasfaserkabels im Rechner (1) ermittelt werden.
